# EUROPEAN PATENT SPECIFICATION

(11) **EP 3 781 756 B1**
(45) Date of publication and mention of the grant of the patent: **20.07.2022**
(21) Application number: 19710157.9
(22) Date of filing: 20.02.2019
(51) Int. Cl.: E04B 1/84, B32B 5/02, B32B 5/08, B32B 5/26, B32B 7/027, B32B 7/12

(54) **COMPOSITE ACOUSTIC LAYER**
AKUSTISCHE VERBUNDSCHICHT
COUCHE ACOUSTIQUE COMPOSITE

(30) Priority: 22.02.2018 EP 18158093
(43) Date of publication of application: 24.02.2021
(73) Proprietor: Low & Bonar Inc., Enka, North Carolina 28728 (US)
(72) Inventor: LASH, Ronny Odell, deceased (US)
(74) Representative: CPW GmbH
(86) International application number: PCT/IB2019/051372
(87) International publication number: WO 2019/162849

(56) References cited:
- EP-A1- 3 246 442
- WO-A1-2004/013395
- US-A1- 2010 081 354
- US-A1- 2014 291 068
- DATABASE WPI Week 199233 Thomson Scientific, London, GB; AN 1992-272991 XP002790980, & JP H04 185752 A (DYNIC CORP) 2 July 1992 (1992-07-02)

## Description

The invention pertains to an acoustic layer, in particular for automotive applications.

An acoustic layer may be used in a product such as a noise vibration harshness (NVH) product, for example in automotive flooring products, such as tufted car carpets, or in dashboard systems, that helps to make vehicles quieter.

Known products used as acoustic layer in automotive flooring products are microfiber nonwovens such as for example Evolon^{®}, available from Freudenberg, or airlaid nonwovens. These microfiber nonwovens or airlaid nonwovens acoustic layers are placed onto the backside of a carpet. However, with the use of one layer of airlaid nonwovens is it very difficult to meet, let alone exceed, the absorption and insulating targets in the automotive industry.

WO 2004/013395 discloses an acoustical insulation laminate for e.g. automotive applications, comprising a meltblown as a first nonwoven layer and a through-air bonded carded web as a second nonwoven layer.

However, there remains a need to improve the acoustic performance of acoustic layers and/or to reduce the weight of a finished noise vibration harshness (NVH) product.

It is an object of the invention to provide an acoustic layer having improved acoustic performance and/or enabling reduced weight of a finished noise vibration harshness product.

The object of the invention is achieved by the composite acoustic layer in accordance with claim 1.

The composite acoustic layer according to the invention may be an absorption acoustic layer that may be used in a product such as a noise vibration harshness (NVH) product that helps to make vehicles quieter, lighter and more economical. The composite acoustic layer may be considered as a thin, lightweight, rigid acoustic layer as compared to prior art thick, lofty, airlaid acoustic layers. The composite acoustic layer has a total weight in the range of 100 g/m² to 500 g/m².

The composite acoustic layer is capable of enduring the demanding automotive process while targeting the desirable air flow resistance (AFR) / Rayl range value in the final composite part and/or in the final noise vibration harshness product. The composite acoustic layer can be available at two different Rayl ranges, e.g. one for processing and one for off the shelf. For example, the off the shelf product may have an AFR / Rayl range value targeted for full coverage and/or dye cut pieces strategically placed for desirable areas that need additional acoustic support, or the product for processing may be a semi-processed acoustic layer for full coverage that can endure and progress to a desirable AFR / Rayl range value during an automotive process where hot and cold temperatures are presented along with pressure moulding.

The composite acoustic layer may have a Rayl value in the range from 300 Rayls to 7500 Rayls, preferably from 500 Rayls to 5500 Rayls, depending on what is desired from the manufacturer of the automotive flooring products, such as tufted car carpets, or in dashboard systems, and/or what is desired from the car manufacturer. The Rayl value is the characteristic acoustic impedance, wherein 1 Rayl equals 1 Pa.s/m.

The composite acoustic layer, off the shelf product, may have a Rayl value in the range of 500 Rayls to 5500 Rayls, preferably from 3500 Rayls to 5500 Rayls, for full coverage and/or dye cut pieces strategically placed for desirable areas that need additional acoustic support.

The composite acoustic layer may have a Rayl value in the range of 300 Rayls to 1500 Rayls, preferably from 500 Rayls to 1200 Rayls, for a semi-processed composite acoustic layer, which may develop into a range of 3700 Rayls to 5500 Rayls during an automotive process where hot and cold temperatures are presented along with pressure moulding. The composite acoustic layer according to the invention may utilize the conditions encountered during an automotive process where hot and cold temperatures are presented along with pressure moulding to obtain a Rayl value in the range of 3700 Rayls to 5500 Rayls in the noise vibration harshness (NVH) product.

The composite acoustic layer enables to achieve at least 10 dB, preferably at least 20 dB, reduction by the noise vibration harshness (NVH) product, as determined by impedance tube measurements according to ASTM E1050.

The composite acoustic layer comprising a first nonwoven material consisting of filaments having a linear density in the range of 2 to 50 dtex, wherein the first nonwoven material is a thermally bonded nonwoven material, and comprising a second nonwoven material connected to the first nonwoven material, wherein the second nonwoven material is a carded staple fiber nonwoven enables that the composite acoustic layer has a desirable air flow resistance (AFR) or Rayl range which ensures acoustic performance in a noise vibration harshness (NVH) product comprising the composite acoustic layer, while enabling a relatively low weight of the noise vibration harshness product.

The composite acoustic layer can be considered a sound-barrier, de-coupler and may be used in, for example, the automotive field, in commercial or residential flooring, and in other building products where noise attenuation may be desired.

The composite acoustic layer offers superior absorption performance and moderate sound transmission loss (STL) performance, as preferably determined according to ASTM E90.

The composite acoustic layer comprises at least a first nonwoven material consisting of filaments having a linear density in the range of 5 to 50 dtex, wherein the first nonwoven material is a thermally bonded nonwoven material, and comprising a second nonwoven material connected to the first nonwoven material, wherein the second nonwoven material is a carded staple fiber nonwoven, and wherein the composite acoustic layer has a total weight in the range of 100 g/m² to 500 g/m².

The first nonwoven material consists preferably of filaments having a linear density in the range of 5 to 25 dtex, preferably in the range of 6 to 20 dtex, more preferably in the range of 7 to 15 dtex, thereby enabling that the first nonwoven material has a relatively high surface openness, allowing the first nonwoven material of the composite acoustic layer to be impregnated with a polymer coating, for example a coating comprising or consisting of polyethylene, when being attached to the back side of a greige carpet, i.e. a primary carpet backing into which pile yarns are tufted, or when being attached to the back side of other substrates, such as for example airlaid nonwovens, needle punched nonwovens, luxury vinyl tiles, or wall or ceiling panels, while retaining some porosity to arrive at a desirable air flow resistance (AFR) or Rayl range for the final noise vibration harshness (NVH) product, for example a tufted carpet, comprising the composite acoustic layer. It has been observed that nonwoven material consisting of filaments having a linear density less than 5 dtex are closed off (almost) completely when being impregnated with a polymer coating, which increases the air flow resistance to very high levels, which would make the first nonwoven material unsuitable for the intended purpose of being utilized in a noise vibration harshness (NVH) product.

The porosity retained in the composite acoustic layer when the first nonwoven material is being impregnated with a polymer coating is sufficient to provide a torturous path for sound to travel into the composite acoustic layer and become absorbed and dissipated within the composite acoustic layer. The composite acoustic layer according to the invention provides a multiple-layer, thin, lightweight, processable acoustic material that can endure the temperatures and pressures in automotive processes to achieve a noise vibration harshness (NVH) products, such as light weight flooring products, dash and trunk systems.

The porosity retained in the composite acoustic layer when the first nonwoven material is being impregnated with a polymer coating is low enough to prevent that sound travels right through the acoustic layer. For example, sounds from outside a vehicle through window seals, engine and wheel noise may enter the vehicle, or sounds from conversations, radio, and the like, may be present inside the vehicle. These sounds may be reflected by hard surfaces like glass windows, dashboard and door plastics. When a floor system is very porous, the sound will travel right through the floor system until the sound hits the metal of the under-carriage and is reflected back through the floor system into the cabin of the vehicle again, which is detrimental to the acoustics in the cabin of the vehicle.

The composite acoustic layer may also advantageously be used in combination with other substrates, such as for example airlaid nonwovens, needle punched nonwovens, luxury vinyl tiles, wall or ceiling panels, wall paper, or other flooring, wall or ceiling products.

Although the air flow resistance (AFR) / Rayl value for the first nonwoven material of the composite acoustic layer is very low, for example less than 100 Rayls, due to the relatively high surface openness of the first nonwoven material, the combination of the first nonwoven material with the second carded staple fiber nonwoven ensures that the composite acoustic layer has a sufficiently high air flow resistance, while avoiding that the composite acoustic layer is completely closed off when being impregnated with a polymer coating.

The composite acoustic layer may comprise an adhesive material, preferably an adhesive powder, which adheres to the first nonwoven material and/or to the second nonwoven material of the composite acoustic layer, enabling to further increase the air flow resistance of the composite acoustic layer. Preferably, the adhesive material comprised in the composite acoustic layer has a weight in the range of 10 to 100 g/m², more preferably in the range of 10 to 50 g/m².more preferably in the range of 12 to 25 g/m².

The relatively high linear density of the filaments of the first nonwoven layer increases the stiffness of the composite acoustic layer, in particular when the filaments have a high modulus obtained by mechanically drawing the filaments, which is found to be advantageous in a multilayer absorber/de-coupler acoustic layer. In an embodiment, the filaments of the first nonwoven layer are bicomponent core/sheath filaments, which further increases the stiffness of the composite acoustic layer due to the high frequency thermal bond points at intersections of the bicomponent core/sheath filaments.

The first nonwoven material of the composite acoustic layer is a thermally bonded nonwoven in which the filaments are bonded at intersections of the filaments. Preferably, the first nonwoven material comprises a first polymer having a first melting temperature and a second polymer having a second melting temperature which is lower than the first melting temperature, allowing the first nonwoven material to be thermally bonded at a temperature and a pressure at which the second polymer is melted, or at least softened, to form bonding points at crossing points of filaments, i.e. at intersections of the filaments.

The first polymer of the first nonwoven material of the composite acoustic layer may be any polymer which is able to withstand the temperatures encountered during the process to manufacture the NVH product, in particular an automotive tufted carpet. Preferably, the first polymer is a polyester, which may be selected from a polyethylene terephthalate, a polybutylene terephthalate, or a polytrimethylene terephthalate, or a polyamide, such as for example polyamide-6, or blends or copolymers thereof. Preferably, the first polymer is a polyethylene terephthalate.

The second polymer of the first nonwoven material of the composite acoustic layer may be any polymer having a lower melting temperature than the first polymer. Preferably, the second polymer is a polyamide or a copolymer thereof, such as for example a polyamide-6, or a polyester, such as for example a polybutylene terephthalate, or a co-polymer thereof, or a polyolefin, such as for example a polyethylene or a polypropylene, or a copolymer thereof.

In an embodiment, the first polymer may form first monocomponent filaments and the second polymer may form second monocomponent filaments, i.e. the first polymer is comprised in first monocomponent filaments and the second polymer is comprised in second monocomponent filaments.

In another embodiment, the first polymer may form a first component of bicomponent filaments and the second polymer may form a second component of the bicomponent filaments, i.e. the first polymer is comprised in a first component of bicomponent filaments and the second polymer is comprised in a second component of bicomponent filaments, to further increase the breaking strength and/or stiffness of the composite acoustic layer. The bicomponent filaments may have any configuration, including core/sheath bicomponent filaments, side-by-side bicomponent filaments, or islands-in-the-sea bicomponent filaments. The bicomponent filaments preferably are core/sheath bicomponent filaments.

The second nonwoven material of the composite acoustic layer is a carded staple fiber nonwoven. The second nonwoven material may be a thermally bonded carded staple fiber nonwoven. When both the first nonwoven layer and the second nonwoven layer of the composite acoustic layer are thermally bonded, the composite acoustic layer may consist of thermoplastic polymers only, which improves the recyclability of the composite acoustic layer.

The second nonwoven material comprised in the composite acoustic layer consists preferably of staple fibers having a linear density of 6 dtex or less, preferably 3 dtex or less, more preferably 2 dtex or less. Reducing the linear density of the staple fibers comprised in the second nonwoven material of the composite acoustic layer, enables to lower the total weight of the composite acoustic layer at constant air flow resistance, or Rayls value.

The staple fibers of the second nonwoven material of the composite acoustic layer may be made of any suitable material, including a polyester, such as for example a polyethylene terephthalate, a polybutylene terephthalate or a polytrimethylene terephthalate, a polyamide, such as for example a polyamide-6, a polyolefin, such as for example a polyethylene or a polypropylene, or blends or copolymers thereof.

The second nonwoven material of the composite acoustic layer may also comprise a blend of at least two types of monocomponent staple fibers.

The staple fibers of the second nonwoven material of the composite acoustic layer may also be bicomponent staple fibers. The bicomponent staple fibers may have any configuration, including core/sheath bicomponent staple fibers, side-by-side bicomponent staple fibers, or islands-in-the-sea bicomponent staple fibers. The bicomponent staple fibers preferably are core/sheath bicomponent staple fibers.

In an embodiment, the staple fibers of the second nonwoven material of the composite acoustic layer are core/sheath bicomponent staple fibers. Preferably, the core/sheath bicomponent staple fibers comprise a polyester core, more preferably a polyethylene terephthalate core, and a polyolefin sheath, more preferably a polyethylene sheath.

The first nonwoven material and the second nonwoven material may be joined or connected together by any suitable technique, for example through thermal bonding via the polymers of the first nonwoven material and/or the second nonwoven material, by mechanical bonding, e.g. by mechanically needling or by hydroentanglement, or through the use of an adhesive.

In a preferred embodiment, the second nonwoven material of the composite acoustic layer is connected to the first nonwoven material by thermal bonding or through the use of an adhesive without applying mechanical bonding in order to improve the mechanical properties of the composite acoustic layer, in particular the breaking strength and/or the stiffness of the composite acoustic layer, as mechanical bonding may cause some damage to the filaments of the first nonwoven material.

The adhesive may be selected such that the adhesive is melted, or at least softened at temperature and pressure conditions encountered during an automotive process to increase the air flow resistance, or Ray value, of the composite acoustic layer.

The adhesive may be an adhesive film, an adhesive web or an adhesive powder, such as a polyolefin powder, such as for example a polyethylene powder. The adhesive may also be applied as an emulsion or dispersion using a kiss roll or spraying technique. Preferably, the adhesive is a polyethylene powder. The adhesive may for example have a weight of about 20 g/m². The adhesive may form an adhering layer between the first nonwoven and the second nonwoven of the composite acoustic layer. By increasing the weight of the adhering layer the Rayl value of the composite acoustic layer can be increased.

The adhesive may be an adhesive film, in particular an apertured adhesive film, enabling to form an adhering layer between the first nonwoven and the second nonwoven of the composite acoustic layer. By increasing the weight of the apertured adhesive film, or by reducing size and/or number of apertures in the adhesive film, the Rayl value of the composite acoustic layer can be increased.

The composite acoustic layer may include a further layer, for example comprised of a polyolefin film, preferably a polyethylene (PE) film, which enhances the insulation acoustical transmission / insertion loss (STL) of the composite acoustic layer, as well as provides moisture control and vapor barrier properties to the composite acoustic layer and/or the noise vibration harshness product.

The composite acoustic layer according to the invention may provide sufficient acoustic performance at relatively low weight, which is highly desirable in the automotive industry. The weight of the composite acoustic layer may advantageously be 300 g/m² or less, preferably 200 g/m² or less, more preferably 150 g/m² or less.

Preferably, the first nonwoven material of the composite acoustic layer has a weight in the range of 20 to 150 g/m², more preferably 25 to 125 g/m², even more preferably 25 to 100 g/m², most preferably in the range of 40 to 75 g/m².

Preferably, the adhesive comprised in the composite acoustic layer has a weight in the range of 10 to 100 g/m², more preferably in the range of 10 to 50 g/m².more preferably in the range of 12 to 25 g/m².

Preferably, the second nonwoven material of the composite acoustic layer has a weight in the range of 25 to 100 g/m², more preferably in the range of 40 to 75 g/m².

The composite acoustic layer may have a breaking strength in machine direction of at least 150 N/5cm, preferably at least 200 N/5cm, more preferably at least 300 N/5cm as determined according to DIN/ISO 9073-3 - dated October 1996.

The composite acoustic layer may also have a breaking strength in cross machine direction of at least 150 N/5cm, preferably at least 200 N/5cm, more preferably at least 300 N/5cm.

The composite acoustic layer may have an elongation at break in machine direction of at least 25%, preferably at least 30%, more preferably at least 35% as determined according to DIN/ISO 9073-3 - dated October 1996.

The composite acoustic layer may also have an elongation at break in cross machine direction of at least 40%, preferably at least 50%, more preferably at least 60%.

The composite acoustic layer may have a load at specified elongation of 2% (LASE2) in machine direction of at least 80 N/5cm, preferably at least 100 N/5cm, more preferably at least 125 N/5cm as determined according to DIN/ISO 9073-3 - dated October 1996.

The composite acoustic layer may have a load at specified elongation of 2% (LASE2) in cross machine direction of at least 50 N/5cm, preferably at least 60 N/5cm, more preferably at least 75 N/5cm as determined according to DIN/ISO 9073-3 - dated October 1996.

The composite acoustic layer having the preferred range of breaking strength, elongation at break and/or load at specified elongation of 2% is particularly well suited to accommodate the molding process encountered in automotive processes.

The composite acoustic layer may be combined with airlaid nonwovens. However, compared to prior art acoustic layers comprising airlaid nonwovens, the weight of the airlaid nonwoven may be reduced up to 50% when the airlaid nonwoven is combined with the composite acoustic layer according to the invention to obtain similar acoustic performance in a noise vibration harshness (NVH) product, in particular in automotive flooring products, such as tufted car carpets, or in dashboard systems.

Preferably, the composite acoustic layer would be positioned between the airlaid nonwoven and the backside of the coated carpet to enhance the overall acoustic ability of the floor system to exceed, or at least meet, the absorption and/or the insulating targets for a noise vibration harshness (NVH) product.

The composite acoustic layer may also be advantageously used in a commercial or residential flooring product as an additional or replacement sound layer or de-coupler to enhance insertion loss and sound absorption of the flooring product.

The composite acoustic layer may also be advantageously used under the pour in floating concrete floors, in wall or ceiling panels, or in wall papers.

The composite acoustic layer according to the invention may provide sufficient acoustic performance at relatively small thickness. The thickness of the composite acoustic layer may advantageously be 10 mm or less, preferably 5 mm or less, more preferably 2.5 mm or less, as determined in accordance with DIN/ISO 9073-2 - dated October 1996.

### Example 1

A carded staple fiber nonwoven of 55.2 g/m² was provided composed of core/sheath bicomponent staple fibers having a linear density of 2 dtex and a staple fiber length of 2 inch (5.1 mm). The bicomponent staple fibers comprised 50 wt.% of a core composed of polyethylene terephthalate and 50 wt.% of a sheath composed of polyethylene. A polyethylene powder was applied onto the carded staple fiber nonwoven in an amount of 9.2 g/m² by two applicators prior to an oven. The dried carded staple fiber nonwoven comprising the PE powder was at the exit nip of the oven at a temperature of 140°C combined with a nonwoven composed of core/sheath bicomponent filaments having a linear density of 15 dtex comprising 76 wt.% of a core composed of polyethylene terephthalate and 24 wt.% a sheath composed of polyamide-6, and having a weight of 50 g/m², to form the composite acoustic layer.

The composite acoustic layer had a total average weight of 114.4 g/m², and an average thickness of 0.5 mm. The composite acoustic layer had an average air flow resistance (AFR) of 15 Pa.s/m, corresponding to 390 Rayls.

The composite acoustic layer had an average breaking strength of 326 N/5cm in machine direction and 210 N/5cm cross machine direction, an average elongation at break 39% in machine direction and 66% in cross machine direction, and a load at specified elongation of 2% of 125 N/5cm in machine direction and 59 N/5cm in cross machine direction.

### Example 2

A carded staple fiber nonwoven of 75.3 g/m² was provided composed of core/sheath bicomponent staple fibers having a linear density of 2 dtex and a staple fiber length of 2 inch (5.1 mm). The bicomponent staple fibers comprised 50 wt.% of a core composed of polyethylene terephthalate and 50 wt.% of a sheath composed of polyethylene. A polyethylene powder was applied onto the carded staple fiber nonwoven in an amount of 9.2 g/m² by two applicators prior to an oven. The dried carded staple fiber nonwoven comprising the PE powder was at the exit nip of the oven at a temperature of 140°C combined with a nonwoven composed of core/sheath bicomponent filaments having a linear density of 15 dtex comprising 76 wt.% of a core composed of polyethylene terephthalate and 24 wt.% a sheath composed of polyamide-6, and having a weight of 50 g/m², to form the composite acoustic layer.

The composite acoustic layer had a total average weight of 134.5 g/m², and an average thickness of 0.5 mm. The composite acoustic layer had an average air flow resistance of 23 Pa.s/m, corresponding to 598 Rayls.

The composite acoustic layer had an average breaking strength of 378 N/5cm in machine direction and 259 N/5cm cross machine direction, an average elongation at break 39% in machine direction and 63% in cross machine direction, and a load at specified elongation of 2% of 141 N/5cm in machine direction and 81 N/5cm in cross machine direction.

### Example 3

A carded staple fiber nonwoven of 75.3 g/m² was provided composed of core/sheath bicomponent staple fibers having a linear density of 2 dtex and a staple fiber length of 2 inch (5.1 mm). The bicomponent staple fibers comprised 50 wt.% of a core composed of polyethylene terephthalate and 50 wt.% of a sheath composed of polyethylene. A polyethylene powder was applied onto the carded staple fiber nonwoven in an amount of 13.4 g/m² by two applicators prior to an oven. The dried carded staple fiber nonwoven comprising the PE powder was at the exit nip of the oven at a temperature of 140°C combined with a nonwoven composed of core/sheath bicomponent filaments having a linear density of 15 dtex comprising 76 wt.% of a core composed of polyethylene terephthalate and 24 wt.% a sheath composed of polyamide-6, and having a weight of 50 g/m², to form the composite acoustic layer.

The composite acoustic layer had a total average weight of 138.7 g/m², and an average thickness of 0.5 mm. The composite acoustic layer had an average air flow resistance of 30 Pa.s/m, corresponding to 780 Rayls.

The composite acoustic layer had an average breaking strength of 410 N/5cm in machine direction and 306 N/5cm cross machine direction, an average elongation at break 42% in machine direction and 68% in cross machine direction, and a load at specified elongation of 2% of 143 N/5cm in machine direction and 88 N/5cm in cross machine direction.

### Example 4

A carded staple fiber nonwoven of 75.3 g/m² was provided composed of core/sheath bicomponent staple fibers having a linear density of 2 dtex and a staple fiber length of 2 inch (5.1 mm). The bicomponent staple fibers comprised 50 wt.% of a core composed of polyethylene terephthalate and 50 wt.% of a sheath composed of polyethylene. A polyethylene powder was applied onto the carded staple fiber nonwoven in an amount of 16.7 g/m² by two applicators prior to an oven. The dried carded staple fiber nonwoven comprising the PE powder was at the exit nip of the oven at a temperature of 140°C combined with a nonwoven composed of core/sheath bicomponent filaments having a linear density of 15 dtex comprising 76 wt.% of a core composed of polyethylene terephthalate and 24 wt.% a sheath composed of polyamide-6, and having a weight of 50 g/m², to form the composite acoustic layer.

The composite acoustic layer had a total average weight of 142 g/m², and an average thickness of 0.5 mm. The composite acoustic layer had an average air flow resistance of 35 Pa.s/m, corresponding to 910 Rayls.

The composite acoustic layer had an average breaking strength of 422 N/5cm in machine direction and 330 N/5cm cross machine direction, an average elongation at break 39% in machine direction and 69% in cross machine direction, and a load at specified elongation of 2% of 155 N/5cm in machine direction and 97 N/5cm in cross machine direction.

### Example 5

A carded staple fiber nonwoven of 100.3 g/m² was provided composed of core/sheath bicomponent staple fibers having a linear density of 2 dtex and a staple fiber length of 2 inch (5.1 mm). The bicomponent staple fibers comprised 50 wt.% of a core composed of polyethylene terephthalate and 50 wt.% of a sheath composed of polyethylene. A polyethylene powder was applied onto the carded staple fiber nonwoven in an amount of 16.7 g/m² by two applicators prior to an oven. The dried carded staple fiber nonwoven comprising the PE powder was at the exit nip of the oven at a temperature of 140°C combined with a nonwoven composed of core/sheath bicomponent filaments having a linear density of 15 dtex comprising 76 wt.% of a core composed of polyethylene terephthalate and 24 wt.%, a sheath composed of polyamide-6, and having a weight of 50 g/m², to form the composite acoustic layer.

The composite acoustic layer had a total average weight of 167 g/m², and an average thickness of 0.6 mm. The composite acoustic layer had an average air flow resistance of 55 Pa.s/m, corresponding to 1430 Rayls.

The composite acoustic layer had an average breaking strength of 494 N/5cm in machine direction and 333 N/5cm cross machine direction, an average elongation at break 45% in machine direction and 70% in cross machine direction, and a load at specified elongation of 2% of 170 N/5cm in machine direction and 101 N/5cm in cross machine direction.

## Claims

1. A composite acoustic layer comprising a first nonwoven material consisting of filaments having a linear density in the range of 2 to 50 dtex, wherein the first nonwoven material is a thermally bonded nonwoven material, and comprising a second nonwoven material connected to the first nonwoven material, wherein the second nonwoven material is a carded staple fiber nonwoven, and wherein the composite acoustic layer has a total weight in the range of 100 g/m² to 500 g/m².

2. The composite acoustic layer according to claim 1 wherein the first nonwoven material comprises a first polymer having a first melting temperature and a second polymer having a second melting temperature which is lower than the first melting temperature.

3. The composite acoustic layer according to claim 2 wherein the first polymer is comprised in first monocomponent filaments and the second polymer is comprised in second monocomponent filaments.

4. The composite acoustic layer according to claim 2 wherein the first polymer is comprised in a first component of bicomponent filaments and the second polymer is comprised in a second component of bicomponent filaments.

5. The composite acoustic layer according to any of the preceding claims wherein the composite acoustic layer comprises an adhesive.

6. The composite acoustic layer according to claim 5 wherein the adhesive is an adhesive powder.

7. The composite acoustic layer according to claim 6 wherein the adhesive powder is a polyethylene powder.

8. The composite acoustic layer according to any of the preceding claims wherein the second nonwoven material is a carded staple fiber nonwoven consisting of staple fibers having a linear density of 3 dtex or less.

9. The composite acoustic layer according to any of the preceding claims wherein the composite acoustic layer has a Rayl value in the range from 300 Rayls to 7500 Rayls.

10. The composite acoustic layer according to claim 9 wherein the composite acoustic layer has a Rayl value in the range from 3500 Rayls to 7500 Rayls.

11. The composite acoustic layer according to any of the preceding claims wherein the composite acoustic layer has a thickness of 10 mm or less.

12. .A noise vibration harshness product comprising the composite acoustic layer according to any of the preceding claims.

13. The noise vibration harshness product according to claim 12 comprising the composite acoustic layer according to any of the preceding claims attached to a substrate.

14. The noise vibration harshness product according to claim 12 wherein the noise vibration harshness product has a Rayl value in the range from 3700 Rayls to 5500 Rayls.

15. The noise vibration harshness product according to any of claims 12 to 14 wherein the noise vibration harshness product is tufted car carpet, a dashboard system or a trunk system.

## Patentansprüche

1. Akustische Verbundschicht, umfassend ein erstes Vliesmaterial, das aus Filamenten besteht, die eine lineare Dichte im Bereich von 2 bis 50 dtex aufweisen, wobei das erste Vliesmaterial ein thermisch gebundenes Vliesmaterial ist, und umfassend ein zweites Vliesmaterial, das mit dem ersten Vliesmaterial verbunden ist, wobei das zweite Vliesmaterial ein kardiertes Stapelfaservlies ist, und wobei die akustische Verbundschicht ein Gesamtgewicht im Bereich von 100 g/m² bis 500 g/m² aufweist.

2. Akustische Verbundschicht nach Anspruch 1, wobei das erste Vliesmaterial ein erstes Polymer, das eine erste Schmelztemperatur aufweist, und ein zweites Polymer, das eine zweite Schmelztemperatur aufweist, die niedriger ist als die erste Schmelztemperatur, umfasst.

3. Akustische Verbundschicht nach Anspruch 2, wobei das erste Polymer in ersten Monokomponentenfilamenten enthalten ist und das zweite Polymer in zweiten Monokomponentenfilamenten enthalten ist.

4. Akustische Verbundschicht nach Anspruch 2, wobei das erste Polymer in einer ersten Komponente von Bikomponentenfilamenten enthalten ist und das zweite Polymer in einer zweiten Komponente von Bikomponentenfilamenten enthalten ist.

5. Akustische Verbundschicht nach einem der vorstehenden Ansprüche, wobei die akustische Verbundschicht ein Haftmittel umfasst.

6. Akustische Verbundschicht nach Anspruch 5, wobei das Haftmittel ein Haftpulver ist.

7. Akustische Verbundschicht nach Anspruch 6, wobei das Haftpulver ein Polyethylenpulver ist.

8. Akustische Verbundschicht nach einem der vorstehenden Ansprüche, wobei das zweite Vliesmaterial ein kardiertes Stapelfaservlies ist, der aus Stapelfasern besteht, die eine lineare Dichte von 3 dtex oder weniger aufweisen.

9. Akustische Verbundschicht nach einem der vorstehenden Ansprüche, wobei die akustische Verbundschicht einen Rayl-Wert im Bereich von 300 Rayls bis 7500 Rayls aufweist.

10. Akustische Verbundschicht nach Anspruch 9, wobei die akustische Verbundschicht einen Rayl-Wert im Bereich von 3500 Rayls bis 7500 Rayls aufweist.

11. Akustische Verbundschicht nach einem der vorstehenden Ansprüche, wobei die akustische Verbundschicht eine Dicke von 10 mm oder weniger aufweist.

12. Geräusch-Vibration-Rauheit-Produkt, umfassend die akustische Verbundschicht nach einem der vorstehenden Ansprüche.

13. Geräusch-Vibration-Rauheit-Produkt nach Anspruch 12, umfassend die akustische Verbundschicht nach einem der vorstehenden Ansprüche, die an einem Substrat angebracht ist.

14. Geräusch-Vibration-Rauheit-Produkt nach Anspruch 12, wobei das Geräusch-Vibration-Rauheit-Produkt einen Rayl-Wert im Bereich von 3700 Rayls bis 5500 Rayls aufweist.

15. Geräusch-Vibration-Rauheit-Produkt nach einem der Ansprüche 12 bis 14, wobei das Geräusch-Vibration-Rauheit-Produkt ein getufteter Autoteppich, ein Armaturenbrettsystem oder ein Kofferraumsystem ist.

## Revendications

1. Couche acoustique composite comprenant un premier matériau non tissé consistant en filaments présentant une densité linéaire dans la plage de 2 à 50 dtex, dans laquelle le premier matériau non tissé est un matériau non tissé lié thermiquement, et comprenant un second matériau non tissé relié au premier matériau non tissé, dans laquelle le second matériau non tissé est un non tissé en fibres discontinues cardées, et dans laquelle la couche acoustique composite présente un poids total dans la plage de 100 g/m² à 500 g/m².

2. Couche acoustique composite selon la revendication 1, dans laquelle le premier matériau non tissé comprend un premier polymère présentant une première température de fusion et un second polymère présentant une seconde température de fusion qui est inférieure à la première température de fusion.

3. Couche acoustique composite selon la revendication 2, dans laquelle le premier polymère est compris dans des premiers filaments à composant unique et le second polymère est compris dans des seconds filaments à composant unique.

4. Couche acoustique composite selon la revendication 2, dans laquelle le premier polymère est compris dans un premier composant de filaments à deux composants et le second polymère est compris dans un second composant de filaments à deux composants.

5. Couche acoustique composite selon l'une des revendications précédentes dans laquelle la couche acoustique composite comprend un adhésif.

6. Couche acoustique composite selon la revendication 5, dans laquelle l'adhésif est une poudre adhésive.

7. Couche acoustique composite selon la revendication 6, dans laquelle la poudre adhésive est une poudre polyéthylène.

8. Couche acoustique composite selon l'une quelconque des revendications précédentes, dans laquelle le second matériau non tissé est un non tissé en fibres discontinues cardées consistant en des fibres discontinues présentant une densité linéaire de 3 dtex ou moins.

9. Couche acoustique composite selon l'une quelconque des revendications précédentes, dans laquelle la couche acoustique composite présente une valeur rayl dans la plage allant de 300 rayls à 7 500 rayls.

10. Couche acoustique composite selon la revendication 9, dans laquelle la couche acoustique composite présente une valeur rayl dans la plage allant de 3 500 rayls à 7 500 rayls.

11. Couche acoustique composite selon l'une quelconque des revendications précédentes, dans laquelle la couche acoustique composite présente une épaisseur de 10 mm ou moins.

12. Produit rugueux à vibration sonore comprenant la couche acoustique composite selon l'une quelconque des revendications précédentes.

13. Produit rugueux à vibration sonore selon la revendication 12 comprenant la couche acoustique composite selon l'une quelconque des revendications précédentes attachée à un substrat.

14. Produit rugueux à vibration sonore selon la revendication 12, dans lequel le produit rugueux à vibration sonore présente une valeur rayl dans la plage allant de 3 700 rayls à 5 500 rayls.

15. Produit rugueux à vibration sonore selon l'une quelconque des revendications 12 à 14, dans lequel le produit rugueux à vibration sonore est une moquette de voiture tuftée, un système de tableau de bord ou un système de coffre.
